Europäisches Patentamt

European Patent Office

Office européen des brevets

(11) Veröffentlichungsnummer: **0 316 644**
**A1**

(12) **EUROPÄISCHE PATENTANMELDUNG**

(21) Anmeldenummer: 88118115.0

(51) Int. Cl.⁴: **G01D 5/243** , **G01L 1/22**

(22) Anmeldetag: 31.10.88

(30) Priorität: 30.10.87 DE 3736904

(43) Veröffentlichungstag der Anmeldung:
**24.05.89 Patentblatt 89/21**

(84) Benannte Vertragsstaaten:
**ES**

(71) Anmelder: **NORD MICRO Elektronik Feinmechanik AG**
**Victor-Slotosch-Strasse 20**
**D-6000 Frankfurt/Main 60(DE)**

(72) Erfinder: **Waldmann, Dieter**
**Assenheimer Strasse 12**
**D-6367 Karben 1(DE)**

(74) Vertreter: **Seibert, Rudolf, Dipl.-Ing. et al**
**Tattenbachstrasse 9**
**D-8000 München 22(DE)**

(54) **Messeinrichtung mit Sensorelementen.**

(57) Die Erfindung betrifft eine Meßeinrichtung mit Sensorelementen (S+, S-), deren elektrischer Widerstandswert sich unter Einwirkung einer zu messenden Größe ändert, und mit einer mit den Sensorelementen (S+, S-) verbundenen elektronischen Meßschaltung (1), die ein zu der zu messenden Größe in einem definierten Zusammenhang stehendes elektrisches Ausgangssignal abgibt. Dabei ist vorgesehen, daß die Meßschaltung (1) als Ausgangssignal zwei periodische Signale konstanter Amplitude abgibt und zwei Oszillatorschaltungen (4, 4') zur Erzeugung der periodischen Signale umfaßt, in welche Oszillatorschaltungen (4, 4') jeweils wenigstens ein Sensorelement (S+, S-) derart unmittelbar einbezogen ist, daß sein Widerstandswert eine Kenngröße (T, T') des von der jeweiligen Oszillatorschaltung (4, 4') abgegebenen periodischen Signales bestimmt, und daß bezüglich der in die Oszillatorschaltungen (4, 4') einbezogenen Sensorelemente (S+, S-) die Anordnung derart getroffen ist, daß sich unter der Einwirkung der zu messenden Größe der Wert der Kenngröße (T, T') der von den Oszillatorschaltungen (4, 4') jeweils abgegebenen Signale gegenläufig um jeweils den gleichen Betrag ändert.

FIG. 1

EP 0 316 644 A1

## Meßeinrichtung mit Sensorelementen

Die Erfindung bezieht sich auf eine Meßeinrichtung mit Sensorelementen, deren elektrischer Widerstandswert sich unter Einwirkung einer zu messenden Größe z.B eines Druckes ändert, und mit einer mit den Sensorelementen verbundenen elektronischen Meßschaltung, die ein zu der zu messenden Größe in einem definierten Zusammenhang stehendes elektrisches Ausgangssignal abgibt.

Solche Meßeinrichtungen werden z.B. zur Messung von Gewichtskräften in Wägeeinrichtungen verwendet. Die Sensorelemente sind dann an einem von der zu messenden Gewichtskraft beaufschlagten Prüfkörper angebracht, der sich unter der Einwirkung der zu messenden Gewichtskraft verformt. Entsprechend der Verformung des Prüfkörper werden auch die Sensorelemente verformt, was zu einer Änderung des Widerstandswertes der Sensorelemente führt, die mittels einer geeigneten Meßschaltung gemessen werden kann und in einem definierten, durch einen Eichvorgang feststellbaren Verhältnis zu der jeweils wirksamen Gewichtskraft steht. Einen weiteren Anwendungsfall für solche Meßeinrichtungen ist die Messung des Druckes in Flüssigkeiten oder Gasatmosphären. Die Sensorelemente sind dann auf einer sich unter der Wirkung des zu messenden Druckes verformenden Membran angebracht.

Eine Meßeinrichtung mit einem Drucksensor der eingangs angegebenen Art ist in dem Aufsatz von Ralf Asmussen "Sensoren -Tastorgane der Mikroelektronik", veröffentlich in SENSOREN 86/87, S. 137-138, Sonderpublikation der VDI-Z, VDI-Verlag, beschrieben. Bei dieser Meßeinrichtung sind vier gleichartige Sensorelemente zu einer sogenannten Vollbrücke zusammengeschaltet. Die infolge des zu messenden Druckes auftretende Änderungen des Widerstandeswertes der Sensorelemente werden mittels einer Meßschaltung ausgewertet, die als sehr aufwendige und damit teure Analogschaltung ausgeführt ist. Um genaue und über lange Zeit reproduzierbare Meßsignale zu erhalten, sind zur Kompensation von Temperatureinflüssen mehrere Temperatursensoren in die Meßschaltung einbezogen. Dennoch können Meßgenauigkeiten, die infolge von durch Temperaturänderungen bedingten Änderungen des Widerstandswertes der Sensorelemente auftreten, nur unvollkommen ausgeglichen werden. Insbesondere können infolge von temperaturbedingter Nullpunktsdrift der als Analogschaltung ausgeführten Meßschaltung auftretende Meßfehler nicht völlig vermieden werden. Außerdem ist von Nachteil, daß die Meßschaltung der bekannten Meßeinrichtung als Ausgangssignal eine dem zu messenden Druck ihrem Betrag nach entsprechende Gleichspannung abgibt. Ein solches Ausgangssignal kann ohne Gefahr von Störungen nicht über größere Entfernungen übertragen werden. Es ist daher erforderlich, das Ausgangssignal der Meßschaltung vor seiner Übertragung entweder mittels eines Analog-Digital-Wandlers zu digitalisieren oder zumindest einem Spannungs-Frequenz-Wandler zuzuführen. In beiden Fällen entstehen zusätzlich Kosten.

Der Erfindung liegt die Aufgabe zugrunde, eine Meßeinrichtung der eingangs genannten Art so auszubilden, daß eine aufwendige Meßschaltung vermieden ist und die Meßschaltung unmittelbar ein störsicher übertragbares Ausgangssignal abgibt und daß durch Temperatureinflüsse bedingte Änderungen des Widerstandswertes der Sensorelemente ebenso wie durch temperaturbedingte Nullpunktdrift der Meßschaltung verursachte Meßfehler vermieden sind, ohne daß dazu besondere Temperatursensoren erforderlich sind.

Nach der Erfindung wird diese Aufgabe dadurch gelöst, daß die Meßschaltung als Ausgangssignal zwei periodische Signale konstanter Amplitude abgibt und zwei Oszillatorschaltungen zur Erzeugung der periodischen Signale umfaßt, in welche Oszillatorschaltungen jeweils wenigstens ein Sensorelement derart umittelbar einbezogen ist, daß sein Widerstandswert eine Kenngröße des von der jeweiligen Oszillatorschaltung abgegebenen periodischen Signales bestimmt, und daß bezüglich der in die Oszillatorschaltungen einbezogenen Sensorelemente die Anordnung derart getroffen ist, daß sich unter Einwirkung der zu messenden Größe der Wert der Kenngröße der von der Oszillatorschaltung jeweils abgegebenen Signale gegenläufig um jeweils den gleichen Betrag ändert. Im Falle der erfindungsgemäßen Meßeinrichtung können somit zunächst weder durch temperaturbedingte noch durch sonstige Nullpunktdrifte der Meßschaltung verursachte Meßfehler auftreten, da die Meßschaltung als Ausgangssignal Signale konstanter Amplitude abgibt. Da es sich dabei um periodische Signale handelt, können diese störsicher übertragen werden, ohne daß wie beim Stand der Technik eine Analog-Digital-Wandlung oder dergleichen erforderlich wäre. Die beiden periodischen Signale werden mittels zweier Oszillatorschaltungen erzeugt, in die das jeweilige Sensorelement unmittelbar eingebunden ist, so daß Änderungen des Widerstandswertes der Sensorelemente infolge der zu messenden Größe unmittelbar Änderungen der durch den Widerstandswert der Sensorelemente bestimmten Kenngröße der periodischen Signale hervorrufen. Im Falle der erfindungsgemäßen Meßeinrichtung ist die Anordnung der Sensorelemente so getroffen, daß sich unter der Einwirkung der zu messenden Größe der Wert der Kenngröße der von den Oszillatorschaltungen abgegebenen Signalen gegenläufig vorzugsweise um jeweils den gleichen Betrag ändert. Dies hat zur Folge, daß die Differenz des Wertes der Kenngröße der beiden periodischen Signale der zu messenden Größe entspricht. Dies ist zunächst insofern von Vorteil, als sich gegenüber einer Meßeirichtung mit nur einer Oszillatorschaltung und nur einem Sensorelement die doppelte Empfindlichkeit ergibt. Ein wesentlicher Vorteil der erwähnten Maßnahmen liegt aber darin, daß sich temperaturbedingte Änderungen des Widerstandswertes der Sensorelemente nicht nachteilig auf die Meßgenauigkeit auswirken können. Da sich der Widerstandswert der Sensorelemente im Falle von Temperaturänderungen jeweils gleichsinnig um den gleichen Betrag ändern, also für alle Sensorelemente entweder zu- oder abnimmt, ändert sich auch der Wert der Kenngröße beider periodischen Signale gleichsinnig um jeweils den gleichen Betrag. Dies bedeutet aber, daß lediglich der Mittelwert der Kenngrößen, nicht aber die Differenz der Werte der Kenngröße der periodischen Signale und damit die Meßgenauigkeit der Meßeinrichtung durch Temperaturänderungen beeinflußt wird. Im Falle der erfindungsgemäßen Meßeinrichtung sind also besondere Temperatursensoren weder zum Ausgleich temperaturbedingter Nullpunktdrifte der Meßschaltung noch zur Kompensation temperaturbedingter Änderungen des Widerstandswertes der Sensorelemente erforderlich. Nachdem außerdem, wie bereits erwähnt, Analog-Digital-Wandler oder dergleichen zur Gewährleistung einer störsicheren Übertragung des Ausgangssignals der Meßschaltung überflüssig sind und die Meßschaltung im wesentlichen lediglich zwei Oszillatorschaltungen umfaßt, weist die erfindungsgemäße Meßeinrichtung eine im Vergleich zum Stand der Technik wenig aufwendige Meßschaltung auf.

Sofern die beiden periodischen Signale nicht zur weiteren Verarbeitung unmittelbar einer elektronischen Datenverarbeitungseinrichtung, einer Prozeßsteuerung oder dergleichen zugeführt werden, ist nach einer Ausführungsform der Erfindung vorgesehen, daß die Meßschaltung eine Auswerteschaltung umfaßt, der die von den Oszillatorschaltungen abgegebenen periodischen Signale zugeführt werden und die die Differenz der Werte der Kenngrößen der beiden periodischen Signale ermittelt. Die so ermittelte Differenz der Werte der Kenngrößen kann dann mittels einer geeigneten Einrichtung, erforderlichenfalls unter Berücksichtigung eines Eichfaktors oder einer Eichkurve (Kalibrierdaten), als Meßwert der zu messenden Größe angezeigt werden.

In einer besonders vorteilhaften Ausführungsform der Erfindung ist vorgesehen, daß die Auswerteschaltung außerdem den Mittelwert der Kenngrößen der beiden periodischen Signale ermittelt. Da nämlich, wie oben erläutert, Temperaturänderungen den Mittlewert der Kenngröße der beiden periodischen Signale beeinflussen, ist es durch die angegebenen Maßnahmen auf einfache Weise möglich, parallel zur eigentlichen Messung eine Temperaturmessung vorzunehmen, ohne daß dazu besondere Temperatursensoren oder dergleichen erforderlich wären. Es genügt vielmehr, den Mittelwert der Kenngrößen, erforderlichenfalls unter Berücksichtigung von Kalibrierdaten einer Anzeigeeinrichtung zuzuführen oder sonstwie in der erforderlichen Weise weiterzuverarbeiten.

Nach einer Variante der Erfindung geben die Oszillatorschaltungen jeweils ein Rechtecksignal ab, wobei als Kenngröße der Rechtecksignale jeweils deren Tastverhältnis durch den Widerstandswert des in die jeweilige Oszillatorschaltung einbezogenen Sensorelementes bestimmt ist. Derartige Signale können störsicher übertragen werden. Insbesondere kann durch bei der Übertragung der Signale auftretende Störeinflüsse eine Änderung von deren Tastverhältnis praktisch nicht erfolgen. Es besteht jedoch auch die Möglichkeit, die Meßeinrichtung so auszubilden, daß als Kenngröße des von Oszillatorschaltungen jeweils abgegebenen periodischen Signales dessen Frequenz durch den Widerstandswert des in die jeweilige Oszillatorschaltung einbezogenen Sensorelementes bestimmt ist. Auch in diesem Falle ist eine störsichere Übertragung des Signale gewährleistet, und zwar in einem besonders hohen Maße dann, wenn die Oszillatorschaltungen Rechtecksignale abgeben.

Eine Ausführungsform der Erfindung sieht vor, daß die Oszillatorschaltung jeweils einen die Kenngröße des entsprechenden periodischen Signals bestimmenden, aus zwei Widerständen gebildeten Spanungsteilers enthalten, und daß wenigstens einer der Widerstände des Spannungsteilers durch ein Sensorelement gebildet ist. In diesem Falle ist es besonders vor teilhaft, wenn die Widerstände der Spannungsteiler durch jeweils ein Sensorelement gebildet sind und die Anordnung der Sensorelemente derart getroffen ist, daß sich unter der Einwirkung der zu messenden Größe der elektrische Widerstandswert eines Sensorelementes des Spannungsteilers vergrößert während sich der des anderen verringert, da dann eine Verdopplung der Empfindlichkeit des Meßeinrichtung erzielt wird.

Nach einer Variante der Erfindung ist vorgesehen, daß die Oszillatorschaltungen jeweils einen unter Verwendung eines Differenzverstärkers gebildeten astabilen Multivibrator umfassen, der aus einem invertierenden Schmitt-Trigger gebildet ist, der sich selbst über einen Tiefpaß steuert, wobei wenigstens einer der Widerstände des zu Mitkoppelung des Schmitt-Triggers vorgesehenen Spannungsteilers durch ein Sensorelement gebildet ist. Dabei kann außerdem vorgesehen sein, daß die Oszillatorschaltungen jeweils einen dem astabilen Multivibrators nachgeschalteten invertierenden Differenzverstärker umfassen, an dessen Ausgang das jeweilige periodische Signal ansteht und dessen Ausgang mit dem Fußpunkt des Spannungsteilers des Schmitt-Triggers verbunden ist. Durch diese Ausbildung der Oszillatorenschaltungen ist sichergestellt, daß Änderungen der Versorgungsspannung und Nullpunktsdrifterscheinungen der Differenzverstärker die Funktion der Oszillatorschaltungen und damit die Meßgenauigkeit der Meßeinrichtung nicht nachteilig beeinflussen können, da die Differenzverstärker während des Betriebes der Meßschaltung übersteuert sind. In diesem Zusammenhang ist im Hinblick auf die Temperaturstabilität der Meßschaltung von Vorteil, wenn nach Varianten der Erfindung alle Differenzverstärker als integrierte Schaltung auf einem gemeinsamen Substrat (Vielfach-Operationsverstärker) bzw. alle in der Meßschaltung enthaltenen Ohm'schen Widerstände auf einen gemeinsamen Substrat (Widerstands-Array) ausgebildet sind.

Als Sensorelemente können nach Ausführungen der Erfindung sowohl Dehnungsmeßstreifen als auch piezoresistive Wandler vorgesehen sein, wobei erstere besonders für statische und letztere mehr für dynamische Messungen geeignet sind. Dabei ist es zweckmäßig, wenn alle Sensorelemente im unbelasteten Zustand den gleichen Widerstandswert besitzen.

In den beigefügten Zeichnungen sind Ausführungsbeispiele der Erfindung dargestellt. Es zeigen:

Figur 1: in schematischer Darstellung eine erfindungsgemäße Meßeinrichtung

Figur 2: in Form eines Diagramms das Ausgangssignal einer erfindungsgemäßen Meßeinrichtung als Funktion des Wertes der zu messenden Größe,

Figur 3: in schematischer Darstellung eine Variante einer erfindugnsgemäßen Meßeinrichtung, und

Figur 4: das Schaltbild der Oszillatorschaltungen der Meßeinrichtung nach Figur 3.

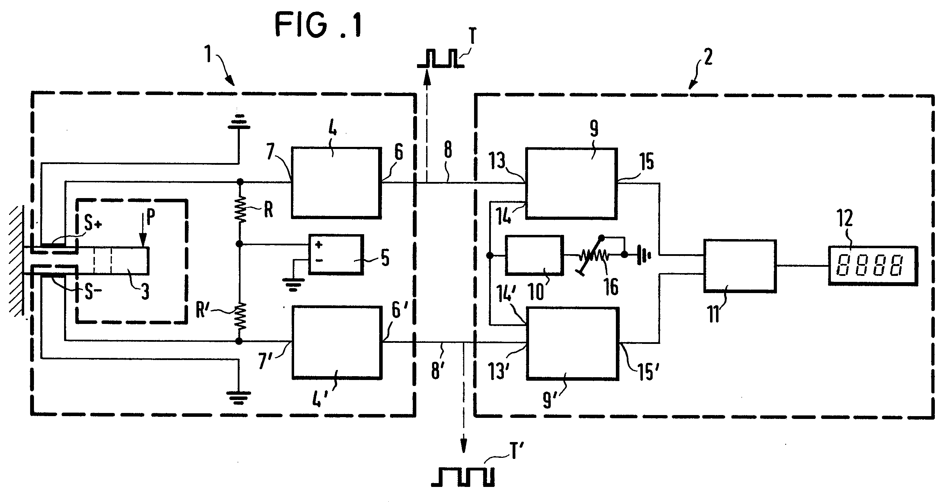

In Figur 1 ist eine erfindungsgemäße Meßeinrichtung dargestellt, die die eigentliche Meßschaltung, die insgesamt mit 1 bezeichnet ist, und eine insgesamt mit 2 bezeichnete Auswerteschaltung umfaßt. Außerdem ist ein als einseitig eingespannter Balken 3 ausgebildeter Prüfkörper vorgesehen, an dem zwei Sensorelemente S + und S- angebracht sind, die in noch näher zu beschreibender Weise in die Meßschaltung 1 einbezogen sind. Bei den Sensorelemente S + und S- handelt es sich um Dehnungsmeßstreifen, die durch Kleben fest mit dem Balken 3 verbunden sind und bei Fehlen einer Last P jeweils den gleichen Widerstandswert aufweisen. Bekanntermaßen übt eine auf einen einseitig austragenden Balken 3 wirkende Last P auf diesen ein Biegemoment aus, das dem Produkt aus der Last P und dem Abstand der Last P von der Einspannung des Balkens 3 entspricht. Dieses Biegemoment ruft in dem Balken 3 Zug- und Druckspannung hervor. Wenn der Balken 3 wie im Falle der Figur 1 einen rechteckigen Querschnitt aufweist und die Last P senkrecht zu denjenigen Flächen wirkt, auf denen die Sensorelemente S + und S- jeweils in Richtung der Längsachse des Balkens 3 gesehen den gleichen Abstand von der Last P aufweisen, sind die im Bereich der Sensorelemente S + bzw. S-wirkenden Zug- bzw. Druckspannungen dem Betrag nach gleich, wobei bei der in Figur 1 gezeigten Wirkungsrichtung der Last P im Bereich des Sensorelementes S + eine Zug- und im Bereich des Sensorelementes S- eine Druckspannung vorliegt. Die Zug-bzw. Druckspannung ziehen Dehnungen bzw. Stauchungen des Balkens 3 nach sich, so daß die Sensorelemente S + bzw. S-gemeinsam mit diesem gedehnt bzw. gestaucht werden. Dies wiederum zieht Änderungen des Widerstandswertes des Sensorelemente S + und S- nach sich, da diese wie erwähnt als Dehnungsstreifen ausgebildet sind und das in diesen in Form eines dünnen Drahtes oder einer dünnen Folie jeweils mäanderförmiger Gestalt enthaltene Widerstandmaterial ebenfalls den erwähnten Dehnungen bzw. Stauchungen unterworfen ist. Im einzelnen nimmt der Widerstandswert des Sensorelementes S +, das eine Dehnung erfährt, zu, während der des Sensorelementes S-, das einer Stauchung unterworfen ist, abnimmt.

Die Meßschaltung 1 umfaßt außer den Sensorelementen S + uns S-zwei gleichartige Oszillatorschaltungen 4 und 4′, zwei Festwiderstände R und R′ gleichen Widerstandswertes sowie eine Konstantspannungsquelle 5, die eine Gleichspannung abgibt. Als Ausgangssignal gibt die Meßschaltung 1 an ihren Ausgängen 6 und 6′, die den Ausgängen der Oszillatorschaltungen 4 und 4′ entsprechen, zwei mittels der Oszillatorschaltungen 4 und 4′ erzeugte Rechtecksignale konstanter Amplitude und konstanter Frequenz ab. Die in Figur 1 nur schematisch angedeuteten Oszillatorschaltungen 4 und 4′ sind so ausgebildet, daß sich das Tastverhältnis T bzw. T′ der von ihnen erzeugten Rechtecksignale jeweils in Abhängigkeit einer an ihren Steuereingängen 7 bzw. 7′ anliegenden Steuerspannung ändert. Die Steuerspannungen werden jeweils mittels eines Spannungs teilers erzeugt, der im Falle der Oszillatorschaltung 4 aus dem Sensorelement S + und dem Festwiderstand R und im Falle der Oszillatorschaltung 4′ aus dem Sensorelement S- und dem Festwiderstand R′ gebildet ist, Dabei ist jeweils der Festwiderstand R bzw. R' mit seinem einen Anschluß mit der Konstantspannungsquelle 5 und mit seinem anderen Anschluß mit dem einen Anschluß des Sensorelementes S + bzw. S- verbunden, dessen anderer Anschluß auf einem Bezugspotential, z.B. Masse, liegt. Der Abgriff der Spannungsteiler ist mit dem Steuereingang 7 bzw. 7' der jeweiligen Oszillatorschaltung 4 bzw. 4' verbunden.

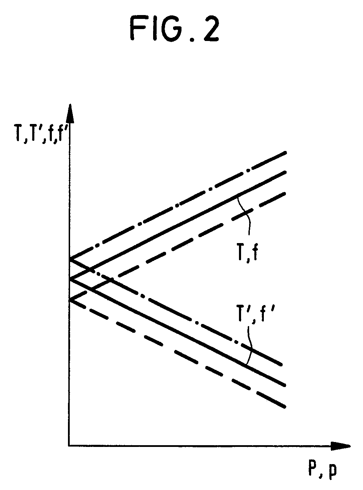

Aus den vorangegangenen Erläuterungen wird deutlich, daß sich das Tastverhältnis T bzw. T' mittels der Oszillatorschaltung 4 bzw. 4' erzeugten Rechtecksignale ausgehend von einem für beide Oszillatorschaltungen 4 bzw. 4' gleichen Wert, der bei fehlender Last P vorliegt, um jeweils einen gleichen Betrag, jedoch gegensinnig ändert, wenn eine Last auf den Balken 3 wirkt. Da einerseits zwischen den durch die Last P hervorgerufenen Dehnungen bzw. Stauchungen des Balkens 3 im Bereich des Sensorelemente S + bzw. S- und damit deren Widerstanswert und andererseits zwischen der an den Steuereingängen 7 bzw. 7' der Oszillatroschaltungen 4 bzw. 4' anliegenden Steuerspannung ein linearer Zusammenhang besteht, ändert sich das Tastverhältnis T bzw. T' der von den Oszillatorschaltungen 4 bzw. 4' erzeugten Rechtecksignale in der Figur 2 in ausgezogenen Linien dargestellten Weise in Abhängigkeit von der Last P. Aus Figur 2 wird weiter deutlich, daß die Differenz der jeweils vorliegenden Werte der Tastverhältnisse T und T' der jeweils wirkamen Last P direkt proportional ist.

Um das von der Meßschaltung 1 erzeugte Ausgangssignal in zweckentsprechender Weise aufzubereiten, so daß es einer elektronischen Datenverarbeitungseinrichtung oder dergleichen zur weiteren Verarbeitung zugeführt oder zur Anzeige gebracht werden kann, ist die Auswerteschaltung 2 vorgesehen, die über die Leitung 8 und 8' mit den Ausgängen 6 und 6' der Meßschal tung 1 verbunden ist. Die Auswerteschaltung 2 umfaßt im wesentlichen zwei Zählerschaltungen 9 und 9', einen Clock-Oszillator 10, eine Subtrahierschaltung 11 und eine Anzeigeeinheit 12. Dabei ist die Anordnung so getroffen, daß die Rechtecksignale den Toren 13 und 13' der Zählerschaltungen 9 und 9' zugeführt sind, während der Ausgang des Clock-Oszillators 10 mit den Eingängen 14 und 14' der Zählerschaltungen 9 und 9' verbunden ist. Dies hat zur Folge, daß die Zählerschaltungen 9 und 9' während der Zeit, in der die Rechtecksignale F und F' jeweils ihren oberen Spannungswert annehmen, aktiviert sind und die von dem Clock-Oszillator 10 den Eingängen 14 und 14' zugeführten Impulse auszählen. Dabei ist die Schwingungsdauer der mittels des Clock-Oszillators erzeugten Rechteckschwingung so gewählt, daß sie um ein Vielfaches geringer ist, als diejenige Zeit, für die die Rechtecksignale ihren oberen Spannungswert annehmen. An den Ausgängen 15 und 15' der Zählerschaltungen 9 und 9' steht dann jeweils ein Zählerstand an, der dem jeweiligen Tastverhältnis T bzw. T' der Rechtecksignale F und F' direkt proportional ist. Die jeweiligen Zählerstände werden dann der Subtrahierschaltung 11 zugeführt, die deren Differenz bildet, die dann mittels der Anzeigeeinheit 12 als Meßwert angezeigt wird. Um eine Eichung der Meßeinrichtung vornehmen zu können, ist die Frequenz der mittels des Clock-Oszillators 10 erzeugten Rechteckschwingung mittels eines Trimmpotentiometers 16 so einstellbar, daß der auf der Anzeigeeinheit 12 zur Anzeige kommende Meßwert mit der tatsächlich vorhanden Last P dem Zahlenwert nach übereinstimmt.

Es versteht sich, daß die Zählerschaltungen 9 und 9' nach jedem Zählvorgang zurückgesetzt werden, nachdem der jeweilge Zählerstand an die Subtrahierschaltung 11 übergeben wurde. Dies kann z.B. geschehen, in dem in nicht dargestellter Weise die Rechtecksignale invertiert und einen Reset-Eingang der jeweilgen Zählerschaltung 9 bzw. 9', evtl. mit geringer zeitlicher Verzögerung, zugeführt werden.

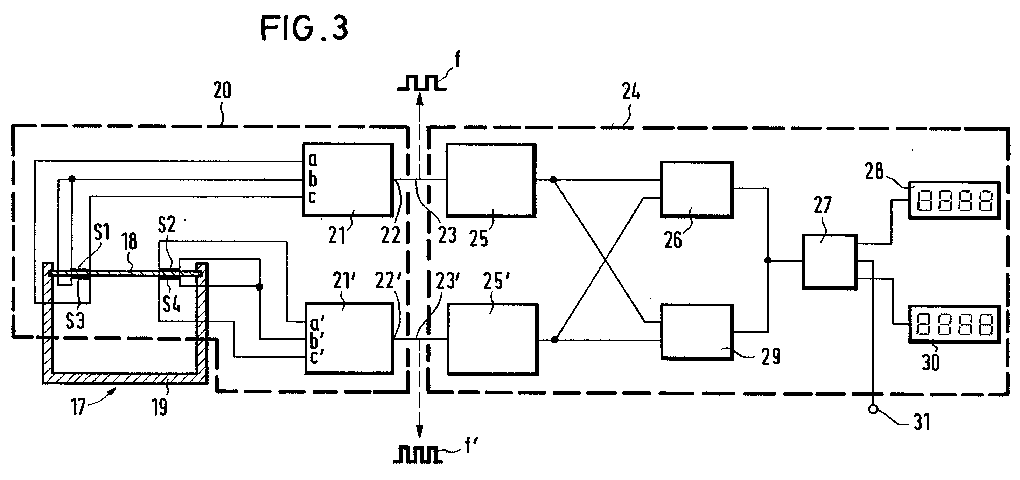

Die in Figur 3 dargestellte erfindungsgemäße Meßeinrichtung dient zur Messung von Drücken. Zu diesem Zweck ist ein Drucksensor 17 vorgesehen, der ein mittels einer Membran 18 hermetisch verschlossenens Gehäuse 19 aufweist. Unter der Wirkung des zu messenden Druckes verformt sich die Membran 18, und zwar wird sie nach innnen gewölbt, wenn der zu messende Druck höher als der in dem Gehäuse herrschende Druck ist, während sie sich nach außen wölbt, wenn der zu messende Druck geringer als der in dem Gehäuse 19 herrschende Druck ist.

Auf der Membran 18 sind insgesamt vier als piezoresistive Wandler ausgebildete Sensorelemente S1, S2, S3 und S4 angebracht. Dabei erfahren die auf der Außenseite der Membran 18 angebrachten Sensorelemente S1 und S2 und die an der Innenseite der Membran 18 angebrachten Sensorelemente S3 und S4 bei einer Verformung der Membran 18 unter der Wirkung eines zu messenden Druckes jeweils Verformungen und damit Änderungen ihres Widerstandswertes, die für alle Sensorelemente S1 bis S4 den gleichen Betrag, für die Sensorelemente S1 und S2 einerseits und die Sensorelemente S3 und S4 andererseits aber unterschiedliche Vorzeichen aufweisen.

Die Sensorelemente S1 und S2 sind in eine insgesamt mit 20 bezeichnete Meßschaltung eingebunden, und zwar sind jeweils die Sensorelemente S1 und S3 sowie die Sensorelemente S2 und S4 zu einem Spannunsteiler zusammengeschaltet. Die Meßschaltung 20 weist zwei Oszillatorschaltungen 21 und 21' auf, deren Bestandteil jeweils der durch die Sensorelemente S1 und S3 bzw. S2 und S4 gebildete Spannungsteiler ist. Dabei sind die Oszillatorschaltungen 21 und 21', die später im einzelnen beschrieben werden, derart ausgebildet, daß das Spannungsteilerverhältnis des jeweiligen Spannungsteilers die Frequenz f bzw. f' eines von den Oszillatorschaltungen jeweils abgegebenen Rechtecksignals konstanter Amplitude bestimmt. Wie sich anhand der mit a, b, c bzw. a', b', c' gekennzeichneten und einander jeweils entsprechenden Anschlüsse der Oszillatorschaltungen 21 und 21' für die Spannungsteiler verfolgen läßt, sind die beiden Spannungsteiler an die beiden Oszillatorschaltungen 21 und 21' jeweils unterschiedlich angeschlossen. Im einzelnen ist im Falle der Oszillatorschaltung 21 das an der Innenseite der Membran 18 angebrachte Sensorelement S3 mit dem Anschluß a verbunden, während das an der Außenseite der Membran angebrachte Sensorelement S1 mit dem Anschluß c verbunden ist. Umgekehrt ist im Falle der Oszillatorschaltung 21, das an der Außenseite der Membran 18 angebrachte Sensorelement S2 mit dem Anschluß a' und das an der Innenseite der Membran 18 angebrachte Sensorelement S4 mit dem Anschluß c' verbunden. Der Abgriff der Spannungsteiler ist im Falle beider Oszillatorschaltungen 21 und 21' mit dem jeweils verbleibenden Anschluß b bzw. b' verbunden.

Infolge der beschriebenen Art und Weise des Anschlusses der durch die Sensorelemente S1 und S3 bzw. S2 und S4 gebildeten Spannungsteiler ändern sich durch die unter der Wirkung eines zu messenden Druckes auftretenden Änderungen der Widerstandswerte der Sensorelemente S1 bis S4 die Frequenzen f unf f' der von den Oszillatorschaltungen 21 und 21' erzeugten Rechtecksignale, deren Frequenzen f unf f' bei Übereinstimmung des zu messenden Druckes mit dem im Gehäuse 19 des Drucksensors 17 herrschenden Druckes übrigens miteinander übereinstimmen, gegensinnig um jeweils den gleichen Betrag, wie dies wieder aus Figur 2 ersichtlich ist. Demzufolge entspricht auch hier die Differenz der Frequenzen f und f' der von den Oszillatorschaltungen 21 und 21' erzeugten Rechtecksignale dem jeweils zu messenden Druck.

Die Rechtecksignale werden von den Ausgängen 22 und 22' der Oszillatorschaltungen 21 und 21' über Leitungen 23 und 23' einer Auswertschaltung 24 zugeführt. Diese weist zwei Frequenzzählerschaltungen 25 und 25' auf, die jeweils die Frequenz f bzw. f' des entsprechenden Rechtecksignales ermitteln. Die erhaltenen Zählerstände werden an eine Subtrahierschaltung 26 übergeben, die die Differenz der Frequenzen f und f' bildet. Das Resultat wird einer elektrischen Rechen einrichtung 27 zugeführt, in der eine Eichkurve gespeichert ist. Anhand der Eichkurve verarbeitet die Recheneinrichtung 27 die ihr zugeführten Resultate der Subtrahierschaltung 26 derart, daß der mittels mit der Recheneinrichtung 27 verbundenen Anzeigeeinheit 28 angezeigte Meßwerte seinem Zahlenwert nach mit dem jeweils vorhandenen Druck übereinstimmt.

In Figur 2 sind zusätzlich zu den bereits im Zusammenhang mit dem Ausführungsbeispiel nach Figur 1 beschriebenen, in ausgezogenen Linien dasgestellten Verhältnissen bei einer Referenztemperatur die Verläufe der Frequenzen f und f' in Abhängigkeit von dem zu messenden Druck p für zwei von der Referenztemperatur abweichende Temperaturen strichliert bzw. strichpunktiert eingetragen. Dabei liegt die eine Temperatur oberhalb und die andere unterhalb der Referenztemperatur. Da Temperaturänderungen eine gleichsinnige Änderung des Widerstandswertes aller Sensorelemente S1 und S4 um den gleichen Betrag bewirken, der zu messende Druck p aber nur dem Betrag nach gleiche Änderungen des Widerstandswertes der Sensorelemente S1 bis S4 bewirkt, diese aber für die in jeweils einem Spannungsteiler enthaltenen Sensorelemente S1 und S3 bzw. S2 und S4 gegensinnig erfolgen, bleibt die einem bestimmten zu messenden Druck p entsprechende Differenz der Frequenz f und f' unabhängig von der jeweils vorliegenden Temperatur konstant, wie dies aus Figur 2 ersichtlich ist. Wie aus Figur 2 weiter ersichtlich ist, ändert sich in Abhängigkeit von der Temperatur lediglich der Mittelwert der Frequenz f und f', der wiederum für eine bestimmte Temperatur unabhängig von dem jeweils vorliegenden Druck p konstant ist.

Es wird also deutlich, daß der Mittelwert des Frequenz f und f' ein Maß für diejenige Tempratur darstellt, der der Drucksensor 17 bzw. die Sensorelemente S1 bis S4 ausgesetzt sind. Um neben der Druckmessung auch eine Temperaturmessung durchführen zu können, genügt es also, die jeweiligen Zählerstände der Frequenzzähler 25 bzw. 25' einer in Figur 3 mit 29 bezeichneten Schaltung zuzuführen, die deren Mittelwert und damit den Mittelwert der Frequenzen f und f' bestimmt und im wesentlichen eine Addier- und eine Subtrahierschaltung umfaßt. Der mittels der Schaltung 29 ermittelte Mittelwert der Frequenzen f und f' wird der elektronischen Recheneinrichtung 27 zugeführt, in der eine zweite Eichkurve abgespeichert ist, anhand derer sie den Mittelwert der Frequenzen f und f' derart verarbeitet, daß auf einer zweiten, mit der elektronischen Recheneinrichtung 27 verbundenen Anzeigeeinheit 30 der der jeweils vorliegenden Temperatur entsprechenden Zahlenwert angezeigt wird.

Bei der Verarbeitung der Differenz und des Mittelwertes der Frequenzen f und f' sowie bei der Anzeige der Zahlenwerte von Druck und Temperatur arbeitet die Recheneinrichtung 27 im Multiplexbetrieb. Außerdem besitzt die elektronische Recheneinrichtung 27 einen Ausgang 31, über den die Zahlenwerte für den Druck und die Temperatur einer elektronischen Datenverarbeitungseinrichtung oder dergleichen zur weiteren Verwendung zugeführt werden können.

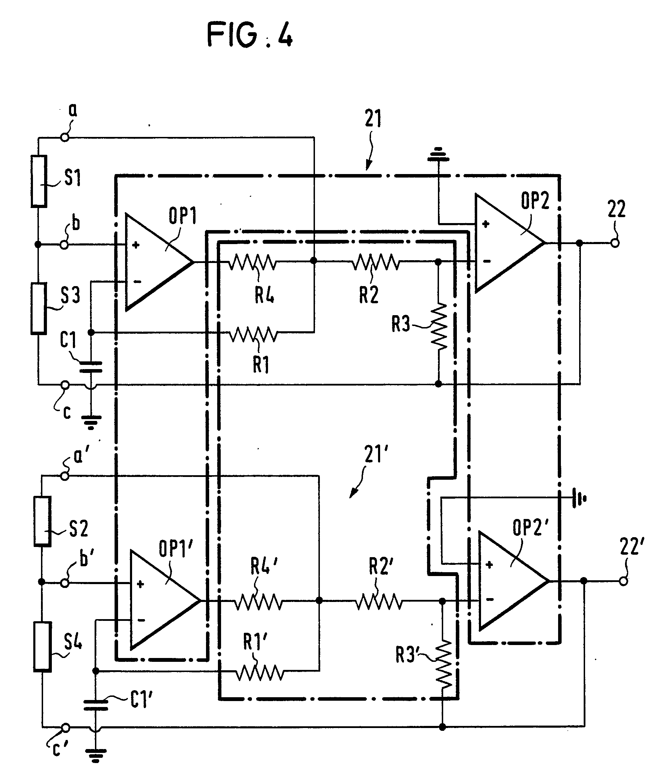

Das Schaltbild der Oszillatorschaltungen 21 und 21' der Meßeinrichtung nach Figur 3 ist in Figur 4 dargestellt. Demnach ist der eingentliche Oszillator jeweils durch einen astabilen Multivibrator gebildet, der einen Differenzverstärker OP1 bzw. OP1' aufweist, der bezüglich seines nichtinvertierenden Eingangs als Schmitt-Trigger beschaltet ist. Dabei bilden die Sensorelemente S1 und S3 bzw. S2 und S4 jeweils den die Schaltspannung des Schmitt-Triggers festlegenden Spannungsteiler. Die Differenzverstärker OP1 bzw. OP1' steuern sich jeweils selbst, indem ihr Ausgang jeweils unter Zwischenschaltung eines durch den Widerstand R1 bzw. R1' und den Kondensator C1 bzw. C1' gebildeten Tiefpasses mit dem invertierenden Eingang verbunden ist. Infolge des Tiefpasses wird das Ausgangssignal jeweils zeitlich verzögert auf den invertierenden Eingang gegeben, so daß sich an den Ausgängen der Differenzverstärker OP1 und OP1' jeweils Rechtecksignale mit einer konstanten Amplitude einstellen, die im wesent lichen der Sättigungsspannung der Differenzverstärker OP1 und OP1' entspricht. Die Frequenz der Rechtecksignale ist einerseits durch die Zeitkonstaate der Tiefpässe und andererseits durch das jeweils durch die Widerstandswerte der Sensorelemente S1 und S3 bzw. S2 und S4 bestimmte Spannungsverhältnis bestimmt. (Die in Figur 3 eingetragenen Bezeichnungen der Anschlußpunkte für die Spannungsteiler sind übrigens in Figur 4 ebenfalls vorhanden.).

Den astabilen Multivibratoren ist jeweils ein mittels der Widerstände R2 und R3 bzw. R2' und R3' als invertierender Verstärker beschalteter Differenzverstärker OP2 bzw. OP2' nachgeschaltet, dessen Ausgang mit dem Fußpunkt c bzw. c' des jeweiligen Spannungsteilers S1 und S3 bzw. S2 und S4 verbunden ist.

Wie in Figur 4 durch strichpunktierte Umrandungen angedeutet ist, sind die Differenzverstärker OP1 bis OP2 als integrierte Schaltung auf einem gemeinsamen Substrat als Vierfach-Operationsverstärker ausgebildet, während die Widerstände R1 bis R4 auf einem gemeinsamen Substrat als Widerstands-Array ausgeführt sind.

Es versteht sich, daß die beiden Oszillatorschaltungen 21 und 21' hinsichtlich der Dimensionierung ihrer Bauteile zweckmäßigerweise identisch sind.

## Ansprüche

1. Meßeinrichtung mit Sensorelementen (S+, S-, S1; S2, S3, S4), deren elektrischer Widerstandswert sich unter Einwirkung einer zu messenden Größe ändert, und mit einer mit den Sensorelementen (S+, S-; S1, S2, S3, S4) verbundenen elektronischen Meßschaltung (1; 20), die ein zu der zu messenden Größe (P; p) in einem definierten Zusammenhang stehendes elektrisches Ausgangssignal abgibt, dadurch gekennzeichnet, daß die Meßschaltung (1; 20) als Ausgangssignal zwei periodische Signale konstanter Amplitude abgibt und zwei Oszillatorschaltungen (4, 4'; 21, 21') zur Erzeugung der periodischen Signale umfaßt, in welche Oszillatorschaltungen (4, 4'; 21, 21') jeweils wenigstens ein Sensorelement (S+, S-; S1, S2, S3, S4) derart unmittelbar einbezogen ist, daß sein Widerstandswert eine Kenngröße (T, T'; f, f') des von der jeweiligen Oszillatorschaltung (4, 4'; 21, 21') abgegebenen periodischen Signals bestimmt, und daß bezüglich der in die Oszillatorschaltung (4, 4'; 21, 21') einbezogenen Sensorelemente (S+, S-; S1, S2, S3, S4) die Anordnung derart getroffen ist, daß sich unter der Einwirkung der zu messenden Größe der Wert der Kenngröße (T, T'; f, f') der von den Oszillatorschaltungen (4, 4'; 21, 21') abgegebenen Signale gegenläufig um jeweils den gleichen Betrag ändert.

2. Meßeinrichtung nach Anspruch 1, dadurch gekennzeichnet, daß die Meßschaltung (1; 20) eine Auswerteschaltung (2; 24) umfaßt, der die von den Oszillatorschaltungen (4, 4'; 21, 21') abgegebenen periodischen Signale zugeführt sind und die die Differenz der Werte der Kenngrößen (T, T'; f, f') der beiden periodischen Signale ermittelt.

3. Meßeinrichtung nach Anspruch 2, dadurch gekennzeichnet, daß die Auswerteschaltung (2; 24) außerdem den Mittelwert der Kenngröße (T, T'; f, f') der beiden periodischen Signale ermittelt.

4. Meßeinrichtung nach einem der Ansprüche 1 bis 3, dadurch gekennzeichnet, daß die Oszillatorschaltungen (4, 4') jeweils ein Rechtecksignal abgeben und daß als Kenngröße der Rechtecksignale jeweils deren Tastverhältnis (T, T') durch den Widerstandswert des in die jeweilige Oszillatorschaltung (4, 4') einbezogenen Sensorelementes (S+, S-) bestimmt ist.

5. Meßeinrichtung nach einem der Ansprüche 1 bis 3, dadurch gekennzeichnet, daß als Kenngröße des von den Oszillatorschaltungen (21, 21') jeweils abgegebenen periodischen Signales dessen Frequenz (f, f') durch den Widerstandswert des in die jeweilige Oszillatorschaltung (21, 21') einbezognen Sensorelementes (S1, S2, S3, S4) bestimmt ist.

6. Meßeinrichtung nach einem der Ansprüche 1 bis 5, dadurch gekennzeichnet, daß die Oszillatorschaltungen (4, 4'; 21, 21') jeweils einen die Kenngröße (T, T'; f, f') des entsprechenden periodischen Signales bestimmenden, aus zwei Widerständen gebildeten Spannungsteiler enthalten und daß wenigstens einer der Widerstände des Spannungsteilers durch ein Sensorelement (S+, S-; S1, S2, S3, S4) gebildet ist.

7. Meßeinrichtung nach Anspruch 6, dadurch gekennzeichnet, daß die Widerstände der Spannungsteiler durch jeweils ein Sensorelement (S1, S2, S3, S4) gebildet sind und die Anordnung der Sensorelemente (S1, S2, S3, S4) derart getroffen ist, daß sich unter der Einwirkung der zu messenden Größe der elektrische Widerstand eines Sensorelementes (S1, S2) des Spannungsteilers vergrößert, während sich der des anderen (S3, S4) verringert.

8. Meßeinrichtung nach Anspruch 5 und einem der Ansprüche 6 oder 7, dadurch gekennzeichnet, daß die Oszillatorschaltungen (21, 21') jeweils unter Verwendung eines Differenzverstärkers (OP1, OP1') gebildeten astabilen Multivibrator umfassen, der aus einem invertierenden Schmitt-Trigger gebildet ist, der sich selbst über einen Tiefpaß steuert, wobei wenigstens einer der Widerstände des zur Mitkoppelung des Schmitt-Triggers vorgesehenen Spannungsteilers durch ein Sensorelement (S1, S2, S3, S4) gebildet ist.

9. Meßeinrichtung nach Anspruch 8, dadurch gekennzeichnet, daß die Oszillatorschaltungen (21, 21') jeweils einen dem astabilen Multivibrator nachgeschalteten invertierenden Differenzverstärker (OP2, OP2') umfassen, an dessen Ausgang das jeweilige periodische Signal ansteht und dessen Ausgang mit dem Fußpunkt (c, c') des Spannungsteilers des Schmitt-Triggers verbunden ist.

10. Meßeinrichtung nach Anspruch 8 oder 9, dadurch gekennzeichnet, daß alle Differenzverstärker (OP1, OP1', OP2 OP2') der Meßschaltung (20) als integrierte Schaltung auf einen gemeinsamen Substrat ausgebildet sind.

11. Meßeinrichtung nach einem der Ansssprüche 1 bis 10, dadurch gekennzeichnet, daß die Meßschaltung (20) ohm'sche Widerstände (R1, R1'; R2, R2'; R3, R3'; R4, R4') umfaßt, die auf einem gemeinsamen Substrat ausgebildet sind.

12. Meßeinrichtung nach einem der Ansprüche 1 bis 11, dadurch gekennzeichnet, daß als Sensorelement (S+, S-) jeweils ein Dehnungsmeßstreifen vorgesehen ist.

13. Meßeinrichtung nach einem der Ansprüche 1 bis 11, dadurch gekennzeichnet, daß als Sensorelement (S1, S2, S3, S4) jeweils ein piezoresistiver Wandler vorgesehen ist.

FIG.1

# FIG. 2

FIG.3

# FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | IEEE TRANSACTIONS ON INSTRUMENTATION AND MEASUREMENT, Band IM-26, Nr. 4, Dezember 1977, Seiten 411-414, IEEE, New York, US; J.L. DORRITY et al.: "A digital force transducer"  \* Seite 412 \*  --- | 1-4,12, 13 | G 01 D 5/243 G 01 L 1/22 |
| A | GB-A-2 026 703 (LUCAS)  \* Insgesamt \*  --- | 1-3,5 | |
| A | ELECTRONICS, Band 52, Nr. 1, Januar 1979, Seite 148; N. BHASKARA RAO: "Digital strain gage eliminates a-d converter"  \* Insgesamt \*  --- | 1-4,6-8 ,11 | |
| A | EP-A-0 081 673 (GRÄSSTIN)  \* Zusammenfassung; Figuren 1,5; Seite 5, Zeilen 12-26 \*  ----- | 1-3,5-8 ,11 | |

### RECHERCHIERTE SACHGEBIETE (Int. Cl.4)

G 01 D
G 01 L

Der vorliegende Recherchenbericht wurde für alle Patentansprüche erstellt

| Recherchenort | Abschlußdatum der Recherche | Prüfer |
|---|---|---|
| DEN HAAG | 02-03-1989 | LLOYD P.A. |